# FASCICULE DE BREVET EUROPEEN

(11) **EP 1 635 081 B1**
(45) Date de publication et mention de la délivrance du brevet: **21.05.2008**
(21) Numéro de dépôt: 05300721.7
(22) Date de dépôt: 07.09.2005
(51) Int. Cl.: F16D 3/06, F16C 23/08, F16C 25/08, F16C 27/04, F16C 27/06, F16C 29/04, F16C 33/61

(54) **Dispositif d'accouplement à billes à maintien articulé de deux arbres coulissants**
Elastische Kupplung mit Kugellagern
Yielding coupling with rolling elements

(30) Priorité: 14.09.2004 FR 0409729
(43) Date de publication de la demande: 15.03.2006
(73) Titulaire: ZF Systèmes de Direction Nacam, S.A.S., 41100 Vendôme (FR)
(72) Inventeur: Bahr, Christophe, 41100 Vendome (FR); Janvier, Arnaud, 41290 Oucques (FR)
(74) Mandataire: Lapoux, Roland

(56) Documents cités:
- WO-A-20/04050453
- DE-A1- 3 740 755
- DE-U1- 8 510 410
- FR-A- 2 795 786

## Description

L'invention se rapporte à un dispositif d'accouplement en rotation de deux arbres coulissants suivant leur axe commun. Le dispositif d'accouplement de l'invention s'applique notamment à une colonne de direction de véhicule automobile comme décrite dans le document FR 2795786, en l'adoptant à la partie intermédiaire de colonne reliée au boîtier de direction, ou à la partie haute de colonne reliée au volant de direction.

Dans le cas plus particulier de l'axe intermédiaire, celui-ci a un cardan à chaque extrémité : un cardan est relié à l'entrée de mouvement du boîtier de direction, et l'autre cardan est relié au haut de colonne. Pour avoir une direction correcte des véhicules automobiles actuels, il est nécessaire que la longueur de l'axe intermédiaire soit variable et s'adapte aux oscillations du train avant du véhicule, qui sont dues au profil et à l'état de surface du revêtement de la route. Cette caractéristique est également demandée pour faciliter l'assemblage sur le pignon de crémaillère, et pour absorber les déplacements lors d'un choc frontal du véhicule.

L'axe intermédiaire doit donc avoir tout d'abord une longueur variable, c'est-à-dire qu'il doit présenter une fonction coulissement de deux arbres l'un par rapport à l'autre suivant leur axe commun, qui est l'axe de la partie intermédiaire. De plus, il faut une fonction transmission du mouvement de rotation entre les deux arbres, et du couple de rotation nécessaire à la manoeuvre de la direction.

Il existe de nombreux dispositifs d'accouplement d'arbre coulissants, qui permettent d'associer le passage du couple de rotation entre les deux arbres par l'utilisation de cannelures, qui sont aménagées sur chacun des deux arbres avec des profils conjugués. Cependant ce type de dispositif présente un jeu franc après un cycle d'endurance équivalent à la durée de vie d'un véhicule, qui est celui demandé sur les voitures actuelles. Afin de retarder l'apparition de ce jeu franc, l'ajustement du coulissement des deux arbres lors de la fabrication est relativement serré, ce qui demande lors du montage en chaîne, un effort axial relativement important, d'où un temps de montage plus important et plus de pénabilité dans la réalisation de ce montage.

Cet ajustement doit être précis pour permettre l'absorption correcte des mouvements axiaux en fonctionnement. Hors lors du passage de couple de rotation, l'effort axial est fonction du couple à transmettre, il y a alors une augmentation de l'effort de coulissement lié au couple à transmettre et au coefficient de frottement, puis un déblocage axial brutal, d'où l'apparition d'à-coups préjudiciables au maintien d'un bon ajustement du coulissement avec un jeu réduit ; et néfaste à une bonne impression de conduite.

Il existe aussi des dispositifs d'accouplement qui utilisent l'injection plastique sur des parties cannelées appartenant à un arbre mâle métallique et un tube femelle métallique. Cette solution pose des problèmes pour absorber des mouvements axiaux sous des couples importants ; les efforts de coulissement augmentent proportionnellement aux forces de frottement entre les deux parties. Par ailleurs l'usure de l'injection plastique laisse apparaître des jeux. Une dernière solution existe en introduisant des éléments de roulements et des ressorts de contraintes entre l'arbre et le tube. Cette solution satisfaisante pour le coulissement sous souple pose des problèmes en terme de rigidité angulaire car elle est directement proportionnelle à la raideur et à la précontrainte des ressorts.

Le but de la présente invention est de proposer un dispositif d'accouplement d'arbres coulissants qui évite les inconvénients précédents, c'est-à-dire un dispositif qui demande un effort axial qui ne soit pas lié au couple à transmettre. Il faut donc que l'effort axial augmente très peu lorsque le couple de rotation à transmettre augmente tout en ayant une forte rigidité angulaire de la transmission. De plus, il faut qu'il n'y ait pas d'apparition de jeu franc après le cycle d'endurance, et que le dispositif d'accouplement des deux arbres puisse se monter facilement dans les encombrements possibles existants sur les véhicules automobiles, et ceci avec un effort axial réduit de mise en place.

L'invention se rapporte à un dispositif d'accouplement de deux arbres : un arbre intérieur et un arbre extérieur qui coulissent l'un dans l'autre suivant la direction de leur axe commun. Ledit dispositif d'accouplement des deux arbres comporte des billes, qui sont disposées entre l'arbre intérieur et l'arbre extérieur.

Dans le dispositif d'accouplement, chacune desdites billes est disposée d'une part dans une partie concave de l'arbre intérieur, et d'autre part dans une partie concave de l'arbre extérieur.

Chacune desdites billes se déplace sur deux chemins de roulement disposés de part et d'autre d'un plan médian passant par l'axe commun et par les centres desdites billes. Chacun des deux chemins de roulement coopère avec la partie concave de l'un des deux arbres et pivote autour d'un axe d'articulation. Les chemins de roulement et les axes d'articulation sont parallèles à l'axe commun. Chacun des deux chemins de roulement est poussé contre chacune desdites billes par un élément élastique prenant appui dans ladite partie concave. Les deux éléments élastiques peuvent constituer un élément élastique double. Chacune desdites billes se déplaçe directement contre la partie concave de l'autre arbre.

Le montage est réalisé de manière qu'au repos, lorsqu'il n'y a pas de transmission de couple, et qu'en action, lorsqu'il y a transmission de couple, chacune desdites billes soit toujours en contact de chaque côté du plan médian, par une zone d'appui avec le chemin de roulement correspondant disposé dans l'un des deux arbres, et par une zone d'appui avec la partie concave de l'autre arbre, et que le centre de chacune desdites billes, le centre de la zone d'appui du chemin de roulement et le centre correspondant de l'axe d'articulation soient toujours alignés.

Dans un type de montage de l'invention, l'axe d'articulation est situé entre la face de coulissement de l'un des deux arbres et la partie concave dudit arbre, de manière que chaque chemin de roulement pivote à la jonction de la face de coulissement et de la partie concave.

Dans un autre type de montage, l'axe d'articulation est situé à l'intérieur de la partie concave de l'un des deux arbres, de manière que chaque chemin de roulement pivote dans ladite partie concave.

Afin d'augmenter la sécurité de fonctionnement du dispositif d'accouplement de l'invention, des rainures mâles et des rainures femelles, ayant des profils conjugués avec un certain jeu, sont aménagés sur l'arbre intérieur et sur l'arbre extérieur, de façon qu'en cas de rupture des billes, le couple puisse être encore transmis entre l'arbre intérieur et l'arbre extérieur.

Plusieurs structures du dispositif d'accouplement peuvent être élaborées. Dans une structure, le ou les éléments élastiques est/sont disposés dans l'arbre intérieur. Dans une autre structure, le ou les éléments élastiques est/sont disposés dans l'arbre extérieur.

Dans une autre structure, les éléments élastiques sont disposés pour certains dans l'arbre intérieur, et pour les autres dans l'arbre extérieur.

Dans un agencement particulier de l'invention, le dispositif d'accouplement a les billes qui sont disposées en plusieurs rangées axiales.

Pour chaque rangée de billes, il est aménagé dans l'arbre extérieur une partie concave en forme de rainure axiale, dont la section comporte deux faces concaves inclinées l'une par rapport à l'autre, qui viennent en contact avec les billes.

Pour chaque rangée de billes, il est aménagé dans l'arbre intérieur une partie concave en forme de rainure axiale dont la section comporte un fond et deux flancs, le fond étant sensiblement perpendiculaire au plan médian passant par l'axe commun et par l'axe des centres des billes de ladite rangée.

Pour chaque rangée de billes, deux chemins de roulement sont disposés de part et d'autre du plan médian et coopèrent avec la partie concave en forme de rainure axiale de l'arbre intérieur. Chaque chemin de roulement est en forme de barre axiale, dont la section a une portion d'appui et une portion pivot.

La portion d'appui a une face déterminée pour venir en contact avec les billes. La portion pivot est en forme de fourche avec une face concave qui coopère avec une forme conjuguée convexe de la face de jonction disposée entre la face de coulissement de l'arbre intérieur et le flanc correspondant de la rainure axiale, la face concave et la face de jonction ayant sensiblement une forme en partie cylindrique dont l'axe est l'axe d'articulation. Chacun des deux chemins de roulement est poussé par un élément élastique qui prend appui sur le fond de la rainure axiale.

Dans un autre agencement particulier de l'invention, le dispositif d'accouplement a les billes qui sont disposées en plusieurs rangées axiales.

Pour chaque rangée de billes, il est aménagé dans l'arbre intérieur une partie concave en forme de rainure axiale, dont la section comporte deux faces concaves inclinées l'une par rapport à l'autre, qui viennent en contact avec les billes.

Pour chaque rangée de billes, il est aménagé dans l'arbre extérieur une partie concave en forme de rainure axiale dont la section comporte un fond et deux flancs, le fond étant sensiblement perpendiculaire au plan médian passant par l'axe commun et par l'axe des centres des billes de ladite rangée.

Pour chaque rangée de billes, deux chemins de roulement sont disposés de part et d'autre du plan médian et coopèrent avec la partie concave en forme de rainure axiale de l'arbre extérieur. Chaque chemin de roulement est en forme de barre axiale, dont la section a une portion d'appui et une portion pivot.

La portion d'appui a une face déterminée pour venir en contact avec les billes. La portion pivot est en forme de fourche avec une face concave qui coopère avec une forme conjuguée convexe de la face de jonction disposée entre la face de coulissement de l'arbre extérieur et le flanc correspondant de la rainure axiale, la face concave et la face de jonction ayant sensiblement une forme en partie cylindrique dont l'axe est l'axe d'articulation. Chacun des deux chemins de roulement est poussé par un élément élastique qui prend appui sur le fond de la rainure axiale.

Dans un autre agencement particulier de l'invention, le dispositif d'accouplement a les billes qui sont disposées en plusieurs rangées axiales.

Pour chaque rangée de billes, il est aménagé dans l'arbre extérieur une partie concave en forme de rainure axiale, dont la section comporte deux faces concaves inclinées l'une par rapport à l'autre, qui viennent en contact avec les billes.

Pour chaque rangée de billes, il est aménagé dans l'arbre intérieur une partie concave en forme de rainure axiale dont la section comporte un fond et deux flancs, le fond étant sensiblement perpendiculaire au plan médian passant par l'axe commun et par l'axe des centres des billes de ladite rangée.

Pour chaque rangée de billes, deux chemins de roulement sont disposés de part et d'autre du plan médian et coopèrent avec la partie concave en forme de rainure axiale de l'arbre intérieur. Chaque chemin de roulement est en forme de barre axiale, dont la section a une portion d'appui et une portion pivot.

La portion d'appui a une face déterminée pour venir en contact avec les billes. La portion pivot est de forme arrondie avec une face convexe qui coopère avec une forme conjuguée concave de la face de jonction disposée entre le fond et le flanc correspondant de la rainure axiale ; la face convexe et la face de jonction ayant sensiblement une forme en partie cylindrique dont l'axe est l'axe d'articulation. Chacun des deux chemins de roulement est poussé par un élément élastique qui prend appui sur le fond de la rainure axiale.

Dans un autre agencement particulier de l'invention, le dispositif d'accouplement a les billes qui sont disposées en plusieurs rangées axiales.

Pour chaque rangée de billes, il est aménagé dans l'arbre intérieur une partie concave en forme de rainure axiale, dont la section comporte deux faces concaves inclinées l'une par rapport à l'autre, qui viennent en contact avec les billes.

Pour chaque rangée de billes, il est aménagé dans l'arbre extérieur une partie concave en forme de rainure axiale dont la section comporte un fond et deux flancs, le fond étant sensiblement perpendiculaire au plan médian passant par l'axe commun et par l'axe des centres des billes de ladite rangée.

Pour chaque rangée de billes, deux chemins de roulement sont disposés de part et d'autre du plan médian et coopèrent avec la partie concave en forme de rainure axiale de l'arbre extérieur. Chaque chemin de roulement est en forme de barre axiale, dont la section a une portion d'appui et une portion pivot.

La portion d'appui a une face déterminée pour venir en contact avec les billes. La portion pivot de forme arrondie avec une face convexe qui coopère avec une forme conjuguée concave de la face de jonction disposée entre le fond et le flanc correspondant de la rainure axiale ; la face convexe et la face de jonction ayant sensiblement une forme en partie cylindrique dont l'axe est l'axe d'articulation. Chacun des deux chemins de roulement est poussé par un élément élastique qui prend appui sur le fond de la rainure axiale.

Selon différentes réalisations de l'invention, chacun des deux chemins de roulement est poussé par un élément élastique qui prend appui sur le fond de la rainure axiale, et qui peut avoir une forme de boudin axial élastique ou une forme d'élément axial élastique.

Dans d'autres réalisations de l'invention, les deux chemins de roulement sont poussés par deux éléments élastiques qui sont reliés pour constituer un élément élastique double en forme d'élément axial élastique double, qui a une section de faible épaisseur. Dans une réalisation, il y a une portion centrale arrondie, qui prend appui sur le fond de la rainure axiale, et deux extrémités recourbées qui agissent sur lesdits chemins de roulement. Dans une autre réalisation, il y a une portion centrale pliée, dont la pliure s'engage et prend appui dans un logement axial du fond de la rainure axiale, et dont les deux extrémités recourbées agissent sur lesdits chemins de roulement.

Dans un montage particulièrement bien équilibré du dispositif d'accouplement, les billes sont disposées en trois rangées axiales. Les rangées axiales sont transversalement à 120° les unes des autres. L'arbre intérieur est muni de trois rainures axiales transversales à 120° les unes des autres. L'arbre extérieur est muni de trois rainures axiales transversales à 120° les unes des autres.

Dans un autre montage particulièrement bien équilibré du dispositif d'accouplement, les billes sont disposées en deux rangées axiales diamétralement opposées. L'arbre intérieur est muni de deux rainures axiales diamétralement opposées. L'arbre extérieur est muni de deux rainures axiales diamétralement opposées.

Dans une architecture complète du dispositif d'accouplement selon l'invention, l'arbre intérieur est muni de trois rainures axiales transversales à 120° les unes des autres. Dans chaque rainure axiale sont montés un élément élastique en forme de boudin axial élastique et deux chemins de roulement en forme de barre axiale.

Les billes sont disposées en trois rangées axiales transversales à 120° les unes des autres, les billes étant maintenues en place les unes par rapport aux autres par une cage en forme de manchon.

L'ensemble du manchon à billes avec les chemins de roulement et les boudins axiaux élastiques est fermé à chaque extrémité axiale par un épaulement et par une bague de maintien. La bague de maintien vient s'engager dans chacune des rainures axiales de l'arbre intérieur.

L'arbre extérieur est muni de trois rainures axiales transversalement à 120° les unes des autres, qui viennent coulisser respectivement sur les rangées de billes. Les rainures axiales ont la longueur voulue pour permettre un coulissement axial demandé de l'arbre extérieur et de l'arbre intérieur.

Le dispositif d'accouplement selon l'invention s'applique très bien soit à la partie intermédiaire d'une colonne de direction de véhicule automobile, soit à la partie haute d'une colonne de direction de véhicule automobile.

Le dispositif d'accouplement de deux arbres suivant leur axe commun selon l'invention présente ainsi l'avantage d'avoir toujours deux zones d'appui pour chacun des deux arbres intérieur et extérieur et pour chaque rangée de billes, qui sont toujours en contact même lorsqu'il n'y a pas de transmission de couple de rotation.

De plus, il y a un effort axial réduit qui est nécessaire lors du montage en chaîne. L'ajustement précis du dispositif d'accouplement de l'invention permet d'éviter les à-coups axiaux lors de la conduite du véhicule, et garantit la bonne tenue à l'endurance en évitant l'apparition de jeu franc dans l'accouplement. De plus, lors du passage du couple de rotation, l'effort axial est réduit considérablement du fait du contact par roulement et par glissement. Enfin, le dispositif d'accouplement peut se monter facilement dans l'encombrement existant des colonnes de direction de véhicule automobile.

D'autres caractéristiques et avantages de la présente invention apparaîtront plus clairement à la lecture de la description suivante de plusieurs réalisations préférées de l'invention, données à titre d'exemples non limitatifs, en référence aux **dessins** annexés correspondants dans lesquels :
- la figure 1 est une vue schématique en perspective d'une direction de véhicule automobile, dans laquelle le dispositif d'accouplement de l'invention s'applique à la partie intermédiaire de colonne ;
- la figure 2 est une vue axiale de la partie intermédiaire de la direction de véhicule automobile de la figure 1, dans laquelle est représenté en coupe axiale partielle un mode de réalisation de l'invention ;
- la figure 3 est une vue éclatée en perspective de l'ensemble du dispositif d'accouplement de la figure 2 ;
- la figure 4 est une coupe transversale suivant IV-IV de la figure 2 ;
- la figure 5 est une vue partielle agrandie de la figure 4 ;
- la figure 6 est une coupe transversale suivant le plan de la figure 4 d'un autre mode de réalisation de l'invention ;
- la figure 7 est une coupe transversale suivant le plan de la figure 4 d'un autre mode de réalisation de l'invention ;
- la figure 8 est une vue partielle agrandie de la figure 7 ;
- la figure 9 est une coupe transversale partielle analogue à la figure 8 d'un autre mode de réalisation de l'invention ;
- la figure 10 est une coupe transversale suivant le plan de la figure 4 d'un autre mode de réalisation de l'invention ;
- la figure 11 est une coupe transversale partielle analogue à la figure 5 d'un autre mode de réalisation de l'invention ;
- la figure 12 est une coupe transversale partielle analogue à la figure 6 d'un autre mode de réalisation de l'invention ;
- la figure 13 représente un mode de réalisation d'un élément axial élastique suivant l'invention.

L'invention se rapporte à un dispositif d'accouplement en rotation de deux arbres qui coulissent l'un dans l'autre suivant leur axe commun.

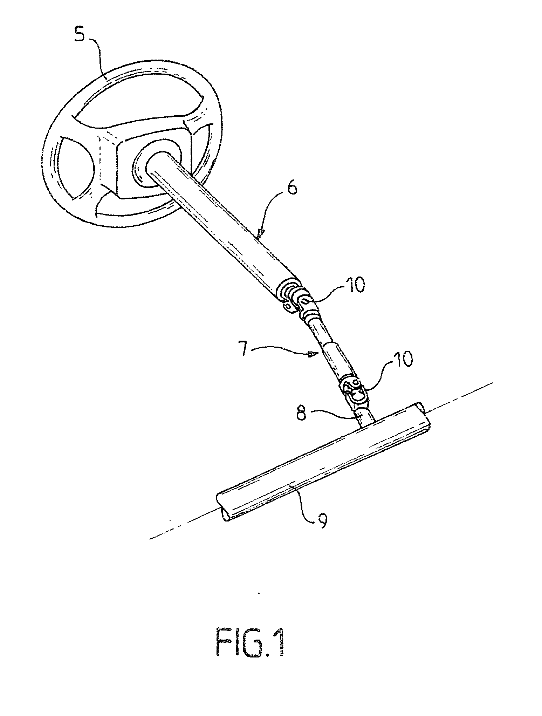

Ce dispositif d'accouplement s'applique particulièrement bien à une direction de véhicule automobile, comme celle qui est représentée schématiquement sur la figure 1.

La direction représentée comporte une colonne de direction avec une partie haute de colonne 6 appelée aussi haut de colonne, et une partie intermédiaire de colonne 7 appelée aussi axe intermédiaire.

La partie haute de colonne 6 est reliée par son extrémité supérieure au volant de direction 5, et par son extrémité inférieure à la partie intermédiaire de colonne 7.

La partie intermédiaire de colonne 7 est reliée par son extrémité supérieure à la partie haute de colonne 6, et par son extrémité inférieure au boîtier de direction 8 de la tige de direction 9.

La partie intermédiaire de colonne 7 est reliée à chacune de ses extrémités au moyen d'une articulation en joint de cardan référencée 10 pour la partie haute de colonne 6, et également référencée 10 pour le boîtier de direction 8.

Dans ce qui suit, la description se rapporte à un dispositif d'accouplement qui est aménagé dans la partie intermédiaire de colonne 7. Le dispositif d'accouplement de l'invention peut également être aménagé dans la partie haute de colonne 6.

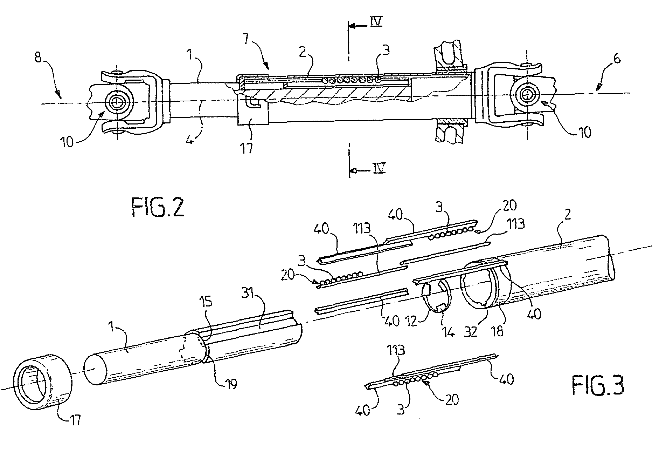

Un arbre intérieur 1 et un arbre extérieur 2 coulissent l'un dans l'autre suivant la direction de leur axe commun 4, qui est représenté sur les figures 2 et 3. Le dispositif d'accouplement des deux arbres comporte des billes 3 dans les différents modes de réalisation décrits ci-après. Les billes 3 sont disposées entre l'arbre intérieur 1 et l'arbre extérieur 2. Dans le dispositif d'accouplement de l'invention, chacune desdites billes 3 est disposé d'une part dans une partie concave de l'arbre intérieur 1, et d'autre part dans une partie concave de l'arbre extérieur 2.

Chacune desdites billes 3 se déplace sur deux chemins de roulement, qui coopèrent avec la partie concave de l'un des deux arbres et qui pivotent autour d'un axe d'articulation. Chaque chemin de roulement et l'axe d'articulation correspondant sont parallèles à l'axe commun 4. Chacun des deux chemins de roulement est poussé par un élément élastique, qui est disposé et qui prend appui dans ladite partie concave. Chacune desdites billes 3 se déplace directement contre la partie concave de l'autre arbre.

Le dispositif d'accouplement selon l'invention est agencé de manière qu'au repos, lorsqu'il n'y a pas de transmission de couple, et qu'en action, lorsqu'il y a transmission de couple, les billes 3 soient toujours en contact. De chaque côté d'un plan médian passant par le centre des billes 3 et par l'axe commun 4, chacune des billes 3 est toujours en contact par une zone d'appui avec le chemin de roulement correspondant disposé dans l'un des deux arbres, et par une zone d'appui avec la partie concave de l'autre arbre. Selon une caractéristique essentielle de l'invention, le dispositif est réalisé de façon que le centre de chacune des billes 3, le centre de la zone d'appui avec le chemin de roulement considéré et le centre correspondant de l'axe d'articulation dudit chemin de roulement soient toujours alignés.

L'ensemble en vue axiale de la partie intermédiaire de colonne 7 est représentée sur la figure 2. L'arbre intérieur 1 et l'arbre extérieur 2 coulissent avec les billes 3 suivant leur axe commun 4. La partie intermédiaire de colonne 7 est reliée au boîtier de direction 8 par le joint de cardan 10, et elle est reliée à la partie haute de colonne 6 par le joint de cardan 10.

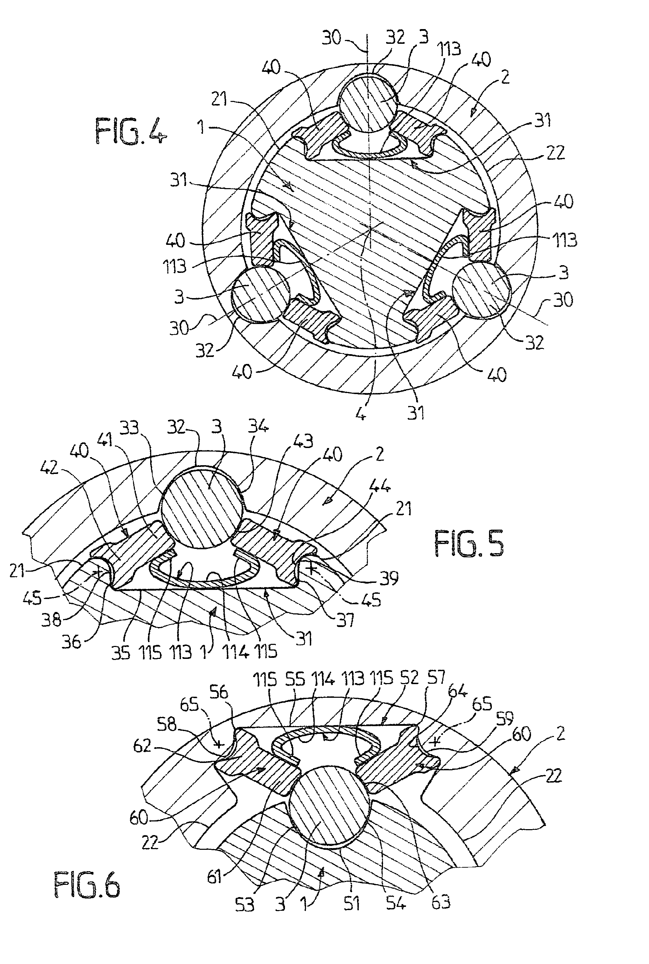

Le dispositif d'accouplement, représenté en vue éclatée sur la figure 3 et en coupe transversale sur les figures 4 et 5, comporte des billes 3 qui sont disposées en trois rangées axiales 20. Les rangées axiales 20 sont situées transversalement à 120° les unes des autres. L'arbre intérieur 1 est muni de trois rainures axiales 31, qui sont situées transversalement à 120 ° les unes des autres. L'arbre extérieur 2 est muni de trois rainures axiales 32, qui sont situées transversalement à 120° les unes des autres.

Pour chaque rangée 20 de billes 3, il est aménagé dans l'arbre extérieur 2 une partie concave en forme de rainure axiale 32, dont la section comporte deux faces concaves 33, 34 inclinées l'une par rapport à l'autre, qui viennent en contact avec les billes 3.

Pour chaque rangée 20 de billes 3, il est aménagé dans l'arbre intérieur 1 une partie concave en forme de rainure axiale 31 dont la section comporte un fond 35 et deux flancs 36, 37. Le fond 35 est sensiblement perpendiculaire au plan médian 30 passant par l'axe commun 4 et par l'axe des centres des billes 3 de ladite rangée 20.

Pour chaque rangée 20 de billes 3, il y a deux chemins de roulement 40 qui sont disposés de part et d'autre du plan médian 30. Les chemins de roulement 40 coopèrent avec la partie concave en forme de rainure axiale 31 de l'arbre intérieur 1.

Chaque chemin de roulement 40 est en forme de barre axiale, dont la section a une portion d'appui 41 et une portion pivot 42.

La portion d'appui 41 a une face 43 déterminée pour venir en contact avec les billes 3. La portion pivot 42 en forme de fourche avec une face concave 44 qui coopère avec une forme conjuguée convexe de la face de jonction 38, 39 qui est disposée entre la face de coulissement 21 de l'arbre intérieur 1 et le flanc correspondant 36, 37 de la rainure axiale 31. La face concave 44 et la face de jonction 38, 39 ont sensiblement une forme en partie cylindrique dont l'axe est l'axe d'articulation 45.

Chacun des deux chemins de roulement 40 est poussé par un élément élastique qui prend appui sur le fond 35 de la rainure axiale 31.

Le dispositif d'accouplement représenté en coupe transversale selon la figure 6 comporte des billes 3 qui sont disposées en trois rangées axiales 20.

Les rangées axiales 20 sont situées transversalement à 120° les une des autres. L'arbre intérieur 1 est muni de trois rainures axiales 51, qui sont situées transversalement à 120° les unes des autres. L'arbre extérieur 2 est muni de trois rainures axiales 52, qui sont situées transversalement à 120° les unes des autres.

Pour chaque rangée 20 de billes 3, il est aménagé dans l'arbre intérieur 1 une partie concave en forme de rainure axiale 51, dont la section comporte deux faces concaves 53, 54 inclinées l'une par rapport à l'autre, qui viennent en contact avec les billes 3.

Pour chaque rangée 20 de billes 3, il est aménagé dans l'arbre extérieur 2 une partie concave en forme de rainure axiale 52 dont la section comporte un fond 55 et deux flancs 56, 57. Le fond 55 est sensiblement perpendiculaire au plan médian 30 passant par l'axe commun 4 et par l'axe des centres des billes 3 de ladite rangée 20.

Pour chaque rangée 20 de billes 3, deux chemins de roulement 60 sont disposés de part et d'autre du plan médian 30. Les chemins de roulement 60 coopèrent avec la partie concave en forme de rainure axiale 52 de l'arbre extérieur 2. Chaque chemin de roulement 60 est en forme de barre axiale, dont la section a une portion d'appui 61 et une portion pivot 62.

La portion d'appui 61 a une face 63 déterminée pour venir en contact avec les billes 3. La portion pivot 62 est en forme de fourche avec une face concave 64, qui coopère avec une forme conjuguée convexe de la face de jonction 58, 59 qui est disposée entre la face de coulissement 22 de l'arbre extérieur 2 et le flanc correspondant 56, 57 de la rainure axiale 52. La face concave 64 et la face de jonction 58, 59 ont sensiblement une forme en partie cylindrique dont l'axe est l'axe d'articulation 65.

Chacun des deux chemins de roulement 60 est poussé par un élément élastique qui prend appui sur le fond 55 de la rainure axiale 52.

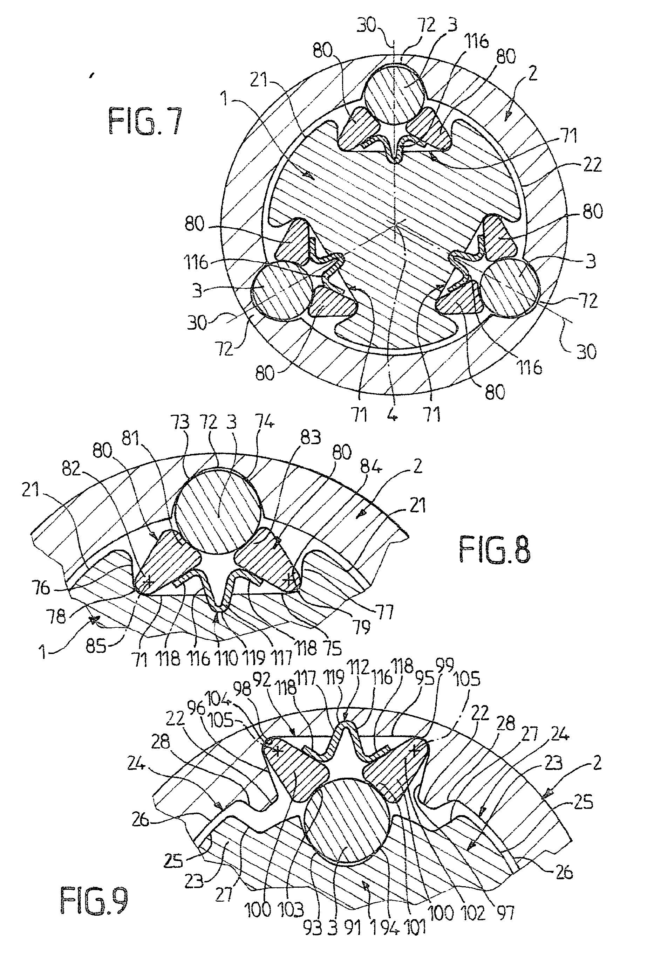

Le dispositif d'accouplement représenté en coupe transversale sur les figures 7 et 8 comporte des billes 3 qui sont disposées en trois rangées axiales 20.

Les rangées axiales 20 sont situées transversalement à 120° les une des autres. L'arbre intérieur 1 est muni de trois rainures axiales 71, qui sont situées transversalement à 120° les unes des autres. L'arbre extérieur 2 est muni de trois rainures axiales 72, qui sont situées transversalement à 120° les unes des autres.

Pour chaque rangée 20 de billes 3, il est aménagé dans l'arbre extérieur 2 une partie concave en forme de rainure axiale 72, dont la section comporte deux faces concaves 73, 74 inclinées l'une par rapport à l'autre, qui viennent en contact avec les billes 3.

Pour chaque rangée 20 de billes 3, il est aménagé dans l'arbre intérieur 1 une partie concave en forme de rainure axiale 71 dont la section comporte un fond 75 et deux flancs 76, 77. Le fond 75 est sensiblement perpendiculaire au plan médian 30 passant par l'axe commun 4 et par l'axe des centres des billes 3 de ladite rangée 20.

Pour chaque rangée 20 de billes 3, deux chemins de roulement 80 sont disposés de part et d'autre du plan médian 30. Les chemins de roulement 80 coopèrent avec la partie concave en forme de rainure axiale 71 de l'arbre intérieur 1. Chaque chemin de roulement 80 est en forme de barre axiale, dont la section a une portion d'appui 81 et une portion pivot 82.

La portion d'appui 81 a une face 83 déterminée pour venir en contact avec les billes 3. La portion pivot 82 est de forme arrondie avec une face convexe 84 qui coopère avec une forme conjuguée concave de la face de jonction 78, 79 qui est disposée entre le fond 75 et le flanc 76, 77 correspondant de la rainure axiale 71. La face convexe 54 et la face de jonction 78, 79 ont sensiblement une forme en partie cylindrique dont l'axe est l'axe d'articulation 85.

Chacun des deux chemins de roulement 80 est poussé par un élément élastique qui prend appui sur le fond 75 de la rainure axiale 71.

Le dispositif d'accouplement représenté en coupe transversale sur la figure 9 comporte des billes 3 qui sont disposées en plusieurs rangées axiales 20.

Les rangées axiales 20 sont situées transversalement à 120° les une des autres. L'arbre intérieur 1 est muni de trois rainures axiales 91, qui sont situées transversalement à 120° les unes des autres. L'arbre extérieur 2 est muni de trois rainures axiales 92, qui sont situées transversalement à 120° les unes des autres.

Pour chaque rangée 20 de billes 3, il est aménagé dans l'arbre intérieur 1 une partie concave en forme de rainure axiale 91, dont la section comporte deux faces concaves 93, 94 inclinées l'une par rapport à l'autre, qui viennent en contact avec les billes 3.

Pour chaque rangée 20 de billes 3, il est aménagé dans l'arbre extérieur 2 une partie concave en forme de rainure axiale 92 dont la section comporte un fond 95 et deux flancs 96, 97. Le fond 95 est sensiblement perpendiculaire au plan médian 30 passant par l'axe commun 4 et par l'axe des centres des billes 3 de ladite rangée 20.

Pour chaque rangée 20 de billes 3, deux chemins de roulement 100 sont disposés de part et d'autre du plan médian 30. Les chemins de roulement 100 coopèrent avec la partie concave en forme de rainure axiale 92 de l'arbre extérieur 2. Chaque chemin de roulement 100 est en forme de barre axiale, dont la section a une portion d'appui 101 et une portion pivot 102.

La portion d'appui 101 a une face 103 déterminée pour venir en contact avec les billes 3. La portion pivot 102 est de forme arrondie avec une face convexe 104 qui coopère avec une forme conjuguée concave de la face de jonction 98, 99 qui est disposée entre le fond 95 et le flanc 96, 97 correspondant de la rainure axiale 92. La face convexe 104 et la face de jonction 98, 99 ont sensiblement une forme en partie cylindrique dont l'axe est l'axe d'articulation 105.

Chacun des deux chemins de roulement 100 est poussé par un élément élastique qui prend appui sur le fond 95 de la rainure axiale 92.

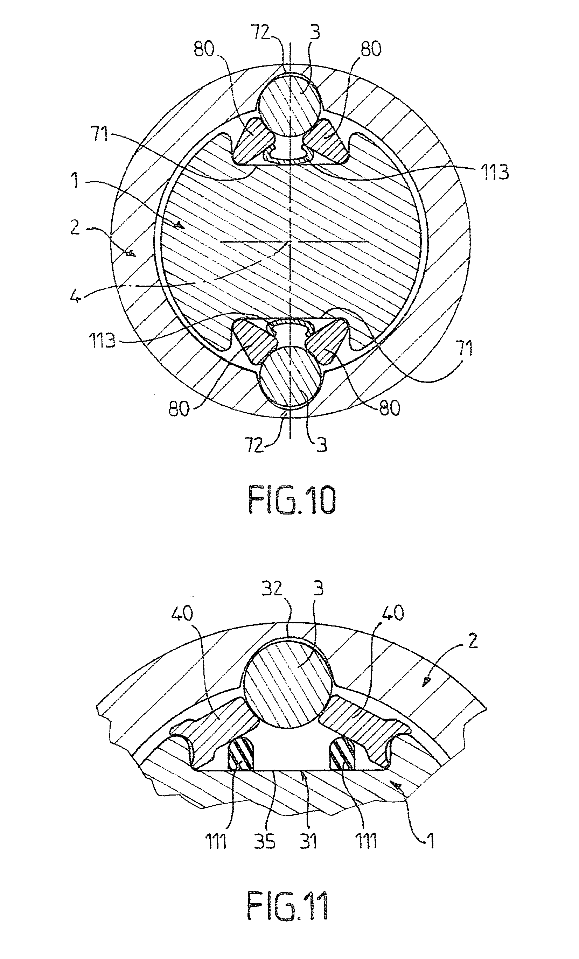

Quel que soit le mode de réalisation représenté sur les figures, et notamment sur les figures 10 et 11, chacun des deux chemins de roulement 40, 60, 80, 100 peut être poussé par un élément élastique en forme de boudin axial élastique 111 qui prend appui sur le fond 35, 55, 75, 95 de la rainure axiale 31, 52, 71, 92.

Quel que soit le mode de réalisation, chacun des deux chemins de roulement 40, 60, 80, 100 peut être poussé par un élément élastique en forme d'élément axial élastique 120 qui prend appui sur le fond 35, 55, 75, 95 de la rainure axiale 31, 52, 71, 92.

Dans les modes de réalisation représenté sur les figures, et notamment sur les figures 4, 5, 6 et 10, chacun des deux chemins de roulement 40, 60, 80, 100 peut être poussé par un élément élastique. Lesdits deux éléments élastiques sont reliés pour constituer un élément élastique double en forme d'élément axial élastique double 113. L'élément élastique double 113 a une section de faible épaisseur avec une portion centrale arrondie 114, qui prend appui sur le fond 35, 55, 75, 95 de la rainure axiale 31, 52, 71, 92 et deux extrémités recourbées 115 qui agissent sur lesdits chemins de roulement.

Dans les modes de réalisation représentés sur les figures et notamment sur les figures 7, 8 et 9, chacun des deux chemins de roulement 40, 60, 80, 100 peut être poussé par un élément élastique. Les deux éléments élastiques sont reliés pour constituer un élément élastique double en forme d'élément axial élastique double 116. L'élément élastique double 116 a une section de faible épaisseur avec une portion centrale pliée 117, dont la pliure 119 s'engage et prend appui dans un logement axial 110 du fond 35, 55, 75, 95 de la rainure axiale 31, 52, 71, 92, et dont les deux extrémités recourbées 118 agissent sur lesdits chemins de roulement.

Comme cela est représenté sur les figures 3 à 9, les billes 3 peuvent être disposées en trois rangées axiales 20, les rangées axiales 20 étant transversalement à 120 ° les unes des autres. L'arbre intérieur 1 est muni de trois rainures axiales 31, 51, 71, 91, les rainures axiales 31, 51, 71, 91 étant transversalement à 120 ° les unes des autres. L'arbre extérieur 2 est muni de trois rainures axiales 32, 52, 72, 92, les rainures axiales 32, 52, 72, 92 étant transversalement à 120° les unes des autres.

Comme c'est le cas de la figure 10, les billes 3 peuvent être disposées en deux rangées axiales 20 diamétralement opposées. L'arbre intérieur 1 est muni de deux rainures axiales 31, 51, 71, 91 diamétralement opposées ; et l'arbre extérieur 2 est muni de deux rainures axiales 32, 52, 72, 92 diamétralement opposées.

Comme cela est représenté sur la figure 9, des rainures mâles 23 et des rainures femelles 24 ayant des profils conjugués avec un certain jeu, sont aménagés sur l'arbre intérieur 1 et l'arbre extérieur 2. Ainsi en cas de perte des billes 3, le couple peut être encore transmis entre l'arbre intérieur 1 et l'arbre extérieur 2.

Comme c'est le cas notamment des figures 4, 5, 7, 8 et 11, les éléments élastiques 111, 113, 116, 120 peuvent être disposés dans l'arbre intérieur 1 et poussés les deux chemins de roulement 40, 80, qui coopèrent avec l'arbre intérieur.

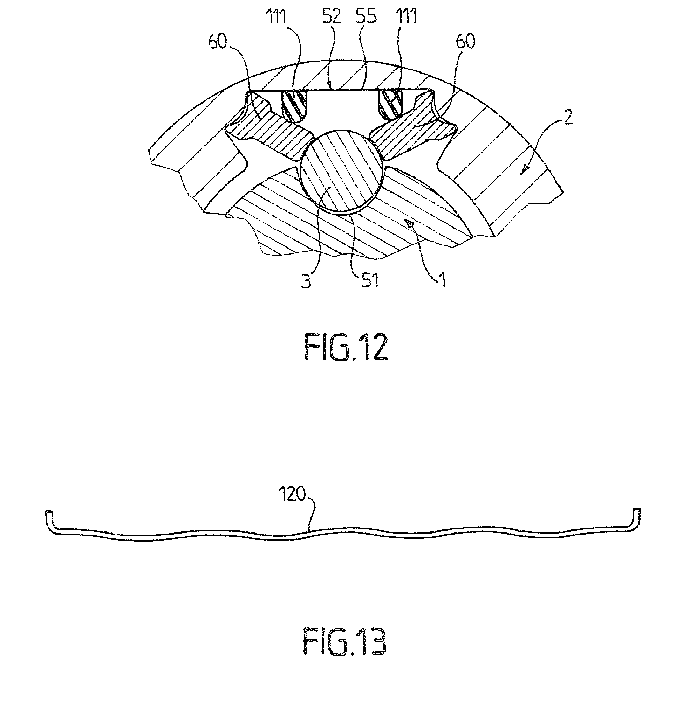

Comme pour notamment les figures 6, 9 et 12, les éléments élastiques 111, 113, 116, 120 peuvent être disposés dans l'arbre extérieur 2 et poussent les deux chemins de roulement 60, 100, qui coopèrent avec l'arbre extérieur.

Tout en restant dans le cadre de l'invention, les éléments élastiques 111, 113, 116, 120) peuvent aussi être disposés pour certains dans l'arbre intérieur 1, et pour les autres dans l'arbre extérieur 2, lesdits éléments élastiques poussant les deux chemins de roulement correspondants, qui coopèrent avec l'arbre considéré.

Dans le mode de réalisation des figures 3, 4 et 5 ainsi que des figures 7 et 8, l'arbre intérieur 1 est muni de trois rainures axiales 31, 71. Les rainures axiales 31, 71 sont transversalement à 120° les unes des autres. Dans chaque rainure axiale 31, 71 sont montés un élément élastique axial 113, 116 et deux chemins de roulement 40, 80 en forme de barre axiale.

Les billes 3 sont disposées en trois rangées axiales 20, qui sont transversalement à 120° les unes des autres.

L'ensemble des billes 3 avec les chemins de roulement 40, 80 et les éléments élastiques 113, 116 est fermé à chaque extrémité axiale par un épaulement 15 et par une bague de maintien 12. La bague de maintien 12 vient s'engager dans chacune des rainures axiales 31, 71 de l'arbre intérieur 1. Un manchon 17 vient s'engager sur la partie lisse de l'arbre intérieur 1 pour s'appuyer sur un épaulement 19.

L'arbre extérieur 2 est muni de trois rainures axiales 32, 72 transversalement à 120° les unes des autres, qui viennent coulisser sur les rangées 20 de billes 3. Les rainures axiales 32, 72 doivent avoir la longueur voulue pour permettre le coulissement axial demandé de l'arbre extérieur 2 et de l'arbre intérieur 1.

Les avantages inhérents à des caractéristiques de l'invention sont énoncés ci-après.

Les billes sont en contact d'une part avec l'un des arbres et d'autre part avec les deux chemins de roulements. Les chemins de roulements sont en contact avec l'autre arbre, et ils peuvent pivoter sur l'arbre. Les chemins de roulements sont en contact avec des éléments élastiques qui ont pour objet de maintenir les contacts entre les chemins de roulement et les billes en un point. La forme des chemins de roulements permet de maintenir ce point de contact sur la ligne reliant le centre de la bille et le point de pivot du chemin de roulement.

Lors de l'assemblage du dispositif, les éléments élastiques permettent de compenser les variations dimensionnelles des différents composants. On peut parler d'absorption des tolérances par déformation des éléments élastiques.

Lors de l'application d'un couple, la charge est transmise du tube sur l'arbre au travers des billes et des chemins de roulement. La ligne d'application de la charge passe par le centre de la bille et le point de pivot du chemin de roulement. Ainsi la charge est reprise directement par l'arbre sans sollicitation sur l'élément élastique. La rigidité angulaire est très importante et indépendante de la raideur des éléments élastiques.

Lors du mouvement axial du tube par rapport à l'arbre, l'effort de coulissement du système est fonction des contraintes sur les billes introduites par les éléments élastiques.

Lors de l'application d'un couple, l'effort de coulissement du système est alors fonction des contraintes sur les billes introduites par les éléments élastiques et le couple appliqué sur le système.

## Revendications

1. - Dispositif d'accouplement de deux arbres, un arbre intérieur (1) et un arbre extérieur (2) qui coulissent l'un dans l'autre suivant la direction d'un axe commun (4), ledit dispositif d'accouplement comportant des billes (3) disposées chacune entre une partie concave de l'arbre intérieur (1) et une partie concave de l'arbre extérieur (2), chacune desdites billes (3) se déplaçant sur deux chemins de roulement (40, 60, 80, 100) disposés de part et d'autre d'un plan médian (30) passant par l'axe commun (4) et par des centres desdites billes (3), **caractérisé en ce que :**
- chacun des deux chemins de roulement (40, 60, 80, 100) coopère avec la partie concave (31, 52, 71, 92) de l'un des deux arbres et pivote autour d'un axe d'articulation (45, 65, 85, 105), les chemins de roulement et les axes d'articulation étant parallèles à l'axe commun (4) ;
- chacun des deux chemins de roulement (40, 60, 80, 100) est poussé contre chacune desdites billes (3) par un élément élastique (111, 113, 116, 120) disposé et prenant appui dans ladite partie concave (31, 52, 71, 92) ; et
- chacune desdites billes (3) se déplaçe directement contre la partie concave (32, 51, 72, 91) de l'autre arbre, de manière :
. qu'au repos, lorsqu'il n'y a pas de transmission de couple, et qu'en action, lorsqu'il y a transmission de couple,
. chacune desdites billes (3) soit toujours en contact de chaque côté du plan médian (30), par une zone d'appui avec le chemin de roulement correspondant (40, 60, 80, 100) disposé dans l'un des deux arbres (1, 2), et par une zone d'appui avec la partie concave (32, 51, 72, 91) de l'autre arbre (2, 1), et
. le centre de chacune desdites billes (3), le centre de la zone d'appui avec le chemin de roulement (40, 60, 80, 100) et le centre correspondant de l'axe d'articulation (45, 65, 85, 105) dudit chemin de roulement soient toujours alignés.

2. - Dispositif d'accouplement selon la revendication 1, **caractérisé en ce que** chacun des deux chemins de roulement (40, 60, 80, 100) est poussé par un élément élastique, lesdits deux éléments élastiques étant reliés l'un à l'autre afin de constituer un élément élastique double (113, 116).

3. - Dispositif d'accouplement selon l'une quelconque des revendications précédentes, **caractérisé en ce que** chacun des deux chemins de roulement (40, 60) pivote autour de l'axe d'articulation (45, 65), qui est situé entre une face de coulissement (21, 22) et la partie concave (31, 52) de l'un des deux arbres (1, 2), de manière que chaque chemin de roulement pivote à la jonction de la face de coulissement (21, 22) et de la partie concave (31, 52).

4. - Dispositif d'accouplement selon la revendication 1 ou 2, **caractérisé en ce que** chacun des deux chemins de roulement (80, 100) pivote autour de l'axe d'articulation (85, 105), qui est situé à l'intérieur de la partie concave (71, 92) de l'un des deux arbres (1, 2), de manière que chaque chemin de roulement pivote dans ladite partie concave.

5. - Dispositif d'accouplement selon l'une quelconque des revendications précédentes, **caractérisé en ce que** des rainures mâles (23) et femelles (24) avec des profils conjugués ayant un certain jeu, sont aménagés sur l'arbre intérieur (1) et l'arbre extérieur (2), de façon qu'en cas de rupture des billes (3), le couple puisse être encore transmis entre l'arbre intérieur (1) et l'arbre extérieur (2).

6. - Dispositif d'accouplement selon l'une quelconque des revendications précédentes, **caractérisé en ce que** les éléments élastiques (111, 113, 116, 120) sont disposés dans l'arbre intérieur (1) et poussent les deux chemins de roulement (40, 80), qui coopèrent avec l'arbre intérieur.

7. - Dispositif d'accouplement selon l'une quelconque des revendications 1 à 5, **caractérisé en ce que** les éléments élastiques (111, 113, 116, 120) sont disposés dans l'arbre extérieur (2) et poussent les deux chemins de roulement (60, 100) qui coopèrent avec l'arbre extérieur.

8. - Dispositif d'accouplement selon l'une quelconque des revendications 1 à 5, **caractérisé en ce que** les éléments élastiques (111, 113, 116, 120) sont disposés pour certains dans l'arbre intérieur (1), et pour les autres dans l'arbre extérieur (2), lesdits éléments élastiques poussant les deux chemins de roulement correspondants qui coopèrent avec l'arbre considéré.

9. - Dispositif d'accouplement selon la revendication 3, **caractérisé en ce que** les billes (3) sont disposées en plusieurs rangées axiales (20) :
- chaque rangée (20) de billes (3) est disposée dans une partie concave de l'arbre extérieur (2) en forme de rainure axiale (32), dont la section comporte deux faces concaves (33, 34) inclinées l'une par rapport à l'autre, qui viennent en contact avec les billes (3) de ladite rangée ;
- chaque rangée (20) de billes (3) est disposée dans une partie concave de l'arbre intérieur (1) en forme de rainure axiale (31) dont la section comporte un fond (35) et deux flancs (36, 37), le fond (35) étant sensiblement perpendiculaire au plan médian (30) passant par l'axe commun (4) et par l'axe des centres des billes (3) de ladite rangée ;
- pour chaque rangée (20) de billes (3), deux chemins de roulement (40) sont disposés de part et d'autre du plan médian (30) et coopèrent avec la partie concave en forme de rainure axiale (31) de l'arbre intérieur (1) et chaque chemin de roulement (40) est en forme de barre axiale, dont la section a
. une portion d'appui (41) avec une face (43) déterminée pour venir en contact avec les billes (3) de ladite rangée (20) ;
. une portion pivot (42) en forme de fourche avec une face concave (44) qui coopère avec une forme conjuguée convexe d'une face de jonction (38, 39) disposée entre la face de coulissement (21) de l'arbre intérieur (1) et le flanc correspondant (36, 37) de la rainure axiale (31), la face concave (44) et la face de jonction (38, 39) ayant sensiblement une forme cylindrique dont l'axe est l'axe d'articulation (45) ; et
- chacun des deux chemins de roulement (40) est poussé par un élément élastique qui prend appui sur le fond (35) de la rainure axiale (31) de l'arbre intérieur.

10. - Dispositif d'accouplement selon la revendication 3, **caractérisé en ce que** les billes (3) sont disposées en plusieurs rangées axiales (20) :
- chaque rangée (20) de billes (3) est disposée dans une partie concave de l'arbre intérieur (1) en forme de rainure axiale (51), dont la section comporte deux faces concaves (53, 54) inclinées l'une par rapport à l'autre, qui viennent en contact avec les billes (3) de ladite rangée;
- chaque rangée (20) de billes (3) est disposée dans une partie concave de l'arbre extérieur (2) en forme de rainure axiale (52) dont la section comporte un fond (55) et deux flancs (56, 57), le fond (55) étant sensiblement perpendiculaire au plan médian (30) passant par l'axe commun (4) et par l'axe des centres des billes (3) de ladite rangée ;
- pour chaque rangée (20) de billes (3), deux chemins de roulement (60) sont disposés de part et d'autre du plan médian (30) et coopèrent avec la partie concave en forme de rainure axiale (52) de l'arbre extérieur (2) et chaque chemin de roulement (60) est en forme de barre axiale, dont la section a :
. une portion d'appui (61) avec une face (63) déterminée pour venir en contact avec les billes (3) de ladite rangée ;
. une portion pivot (62) en forme de fourche avec une face concave (64) qui coopère avec une forme conjuguée convexe d'une face de jonction (58, 59) disposée entre la face de coulissement (22) de l'arbre extérieur (2) et le flanc correspondant (56, 57) de la rainure axiale (52), la face concave (64) et la face de jonction (58, 59) ayant sensiblement une forme cylindrique dont l'axe est l'axe d'articulation (65) ;
- chacun des deux chemins de roulement (60) est poussé par un élément élastique qui prend appui sur le fond (55) de la rainure axiale (52) de l'arbre extérieur.

11. - Dispositif d'accouplement selon la revendication 4, **caractérisé en ce que** les billes (3) sont disposées en plusieurs rangées axiales (20) :
- chaque rangée (20) de billes (3) est disposée dans une partie concave de l'arbre extérieur (2) en forme de rainure axiale (72), dont la section comporte deux faces concaves (73, 74) inclinées l'une par rapport à l'autre, qui viennent en contact avec les billes (3) de ladite rangée ;
- chaque rangée (20) de billes (3) est disposée dans une partie concave de l'arbre intérieur en forme de rainure axiale (71) dont la section comporte un fond (75) et deux flancs (76, 77), le fond (75) étant sensiblement perpendiculaire au plan médian (30) passant par l'axe commun (4) et par l'axe des centres des billes (3) de ladite rangée ;
- pour chaque rangée (20) de billes (3), deux chemins de roulement (80) sont disposés de part et d'autre du plan médian (30) et coopèrent avec la partie concave en forme de rainure axiale (71) de l'arbre intérieur (1) et chaque chemin de roulement (80) est en forme de barre axiale, dont la section a :
. une portion d'appui (81) avec une face (83) déterminée pour venir en contact avec les billes (3) de ladite rangée ;
. une portion pivot (82) de forme arrondie avec une face convexe (84) qui coopère avec une forme conjuguée concave d'une face de jonction (78, 79) disposée entre le fond (75) et le flanc (76, 77) correspondant de la rainure axiale (71), la face convexe (54) et la face de jonction (78, 79) ayant sensiblement une forme en partie cylindrique dont l'axe est l'axe d'articulation (85) ;
- chacun des deux chemins de roulement (80) est poussé par un élément élastique qui prend appui sur le fond (75) de la rainure axiale (71) de l'arbre intérieur.

12. - Dispositif d'accouplement selon la revendication 4, **caractérisé en ce que** les billes (3) sont disposées en plusieurs rangées axiales (20) :
- chaque rangée (20) de billes (3 est disposée dans une partie concave de l'arbre intérieur (1) en forme de rainure axiale (91), dont la section comporte deux faces concaves (93, 94) inclinées l'une par rapport à l'autre, qui viennent en contact avec les billes (3) de ladite rangée;
- chaque rangée (20) de billes (3) est disposée dans une partie concave de l'arbre extérieur (2) en forme de rainure axiale (92) dont la section comporte un fond (95) et deux flancs (96, 97), le fond (95) étant sensiblement perpendiculaire au plan médian (30) passant par l'axe commun (4) et par l'axe des centres des billes (3) de ladite rangée ;
- pour chaque rangée (20) de billes (3), deux chemins de roulement (100) sont disposés de part et d'autre du plan médian (30) et coopèrent avec la partie concave en forme de rainure axiale (92) de l'arbre extérieur (2) et chaque chemin de roulement (100) est en forme de barre axiale, dont la section a :
. une portion d'appui (101) avec une face (103) déterminée pour venir en contact avec les billes (3) de ladite rangée ;
. une portion pivot (102) de forme arrondie avec une face convexe (104) qui coopère avec une forme conjuguée concave d'une face de jonction (98, 99) disposée entre le fond (95) et le flanc (96, 97) correspondant de la rainure axiale (92), la face convexe (104) et la face de jonction (98, 99) ayant sensiblement une forme en partie cylindrique dont l'axe est l'axe d'articulation (105) ;
- chacun des deux chemins de roulement (100) est poussé par un élément élastique qui prend appui sur le fond (95) de la rainure axiale (92) de l'arbre extérieur.

13. - Dispositif d'accouplement selon l'une quelconque des revendications 9 à 12, **caractérisé en ce que** chacun des deux chemins de roulement (40, 60, 80, 100) est poussé par un élément élastique en forme de boudin axial élastique (111) qui prend appui sur le fond (35, 55, 75, 95) de la rainure axiale (31, 52, 71, 92).

14. - Dispositif d'accouplement selon l'une quelconque des revendications 9 à 12, **caractérisé en ce que** chacun des deux chemins de roulement (40, 60, 80, 100) est poussé par un élément élastique en forme d'élément axial élastique (120) qui prend appui sur le fond (35, 55, 75, 95) de la rainure axiale (31, 52, 71, 92).

15. - Dispositif d'accouplement selon l'une quelconque des revendications 9 à 12, **caractérisé en ce que** chacun des deux chemins de roulement (40, 60, 80, 100) est poussé par un élément élastique, lesdits deux éléments élastiques étant reliés pour constituer un élément élastique double en forme d'élément axial élastique double (113), qui a une section de faible épaisseur avec une portion centrale arrondie (114), qui prend appui sur le fond (35, 55, 75, 95) de la rainure axiale (31, 52, 71, 92) et deux extrémités recourbées qui agissent sur lesdits chemins de roulement.

16. - Dispositif d'accouplement selon l'une quelconque des revendications 9 à 12, **caractérisé en ce que** chacun des deux chemins de roulement (40, 60, 80, 100) est poussé par un élément élastique, lesdits deux éléments élastiques étant reliés pour constituer un élément élastique double en forme d'élément axial élastique double (116), qui a une section de faible épaisseur avec une portion centrale pliée (117), dont la pliure (119) s'engage et prend appui dans un logement axial (110) du fond (35, 55, 75, 95) de la rainure axiale (31, 52, 71, 92), et dont les deux extrémités recourbées (118) agissent sur lesdits chemins de roulement.

17. - Dispositif d'accouplement selon l'une quelconque des revendications 9 à 16, **caractérisé en ce que** les billes (3) sont disposées en trois rangées axiales (20) transversales à 120° les unes des autres
- l'arbre intérieur (1) est muni de trois rainures axiales (31, 51, 71, 91) transversales à 120° les unes des autres ;
- l'arbre extérieur (2) est muni de trois rainures axiales (32, 52, 72, 92) transversales à 120° les unes des autres.

18. - Dispositif d'accouplement selon l'une quelconque des revendications 9 à 16, **caractérisé en ce que :**
- les billes (3) sont disposées en deux rangées axiales (20) diamétralement opposées ;
- l'arbre intérieur (1) est muni de deux rainures axiales (31, 51, 71, 91) diamétralement opposées ;
- l'arbre extérieur (2) est muni de deux rainures axiales (32, 52, 72, 92) diamétralement opposées.

19. - Dispositif d'accouplement selon la revendication 9 ou 11, **caractérisé en ce que :**
- l'arbre intérieur (1) est muni de trois rainures axiales (31, 71) transversales à 120° les unes des autres, dans chaque rainure axiale (31, 71) sont montés un élément élastique axial (113, 116) et deux chemins de roulement (40, 80) en forme de barre axiale ;
- les billes (3) sont disposées en trois rangées axiales (20) transversales à 120° les unes des autres ;
- l'ensemble des billes (3) avec les chemins de roulement (40, 80) et les éléments élastiques (113, 116) est fermé à chaque extrémité par un épaulement (15) et par une bague de maintien (12) qui vient s'engager dans chacune des rainures axiales (31, 71) de l'arbre intérieur (1) ; et
- l'arbre extérieur (2) est muni de trois rainures axiales (32, 72) transversalement à 120° les unes des autres, qui viennent coulisser sur les rangées (20) de billes (3), les rainures axiales (32, 72) ayant la longueur voulue pour permettre le coulissement axial demandé de l'arbre extérieur (2) et de l'arbre intérieur (1).

20. - Dispositif d'accouplement selon l'une quelconque des revendications précédentes, **caractérisé en ce qu**'il s'applique à la partie intermédiaire (7) d'une colonne de direction de véhicule automobile.

21. - Dispositif d'accouplement selon l'une quelconque des revendications 1 à 19, **caractérisé en ce qu**'il s'applique à la partie haute (6) d'une colonne de direction de véhicule automobile.

## Claims

1. - A device for coupling two shafts, an inner shaft (1) and an outer shaft (2) which slide one within the other in the direction of a common axis (4), said coupling device including balls (3) disposed between a concave portion of the inner shaft (1) and a concave portion of the outer shaft (2), each of said balls (3) moving on two rolling tracks (40, 60, 80, 100) disposed one on each side of a median plane (30) passing through the common axis and through centers of said balls (3), **characterized in that**
- each of the two rolling tracks (40, 60, 80, 100) cooperates with the concave portion (31, 52, 71, 92) of one of the shafts and pivots about an articulation axis (45, 65, 85, 105), the rolling tracks and the articulation axis being parallel to the common axis (4) ;
- each of the two rolling tracks (40, 60, 80, 100) is pushed against each of said balls (3) by a spring member (111, 113, 116, 120) disposed in and bearing on said concave portion (31, 52, 71, 92) ; and
- each of said balls (3) moves directly against the concave portion (32, 51, 72, 91) of the other shaft, so that:
. at rest, when there is no transmission of torque, and when active, when there is transmission of torque,
. each of said balls (3) is always in contact on each side of the median plane (30), via one bearing area, with the corresponding rolling track (40, 60, 80, 100) disposed in one of the two shafts (1, 2), and through another bearing area with the concave portion (32, 51, 72, 91) of the other shaft (2, 1), and
. the center of each of said balls (3), a center of the bearing area with the rolling track (40, 60, 80, 100) and the corresponding center of the articulation axis (45, 65, 85, 105) of said rolling track are always aligned.

2. - A coupling device according to claim 1, **characterized in that** each of the two rolling tracks (40, 60, 80, 100) is pushed by a spring member, said two spring members being connected to each other to constitute a double spring member (113, 116).

3. - A coupling device according to any one of previous claims, **characterized in that** each of the two rolling tracks (40, 60) pivots about the articulation axis (45, 65), which is situated between a sliding face (21, 22) and the concave portion of one of the two shafts (1, 2), so that each rolling track pivots at a junction of the sliding face (21, 22) and the concave portion (31, 52).

4. - A coupling device according to claim 1 or 2, **characterized in that** each of the two rolling tracks (80, 100) pivots about the articulation axis (85, 105), which is situated inside the concave portion (71, 92) of one of the two shafts (1, 2), so that each rolling track pivots in said concave portion.

5. - A coupling device according to any one of previous claims, **characterized in that** male (23) and female (24) grooves with conjugate profiles having a certain play are made on the inner shaft (1) and the outer shaft (2) so that the torque still is transmitted between the inner shaft (1) and the outer shaft (2) in the event of breakage of the balls (3).

6. - A coupling device according to any one of previous claims, **characterized in that** the spring members (111, 113, 116, 120) are disposed in the inner shaft (1) and push the two rolling tracks (40, 80) which cooperate with the inner shaft.

7. - A coupling device according to any one of claims 1 to 5, **characterized in that** the spring members (111, 113, 116, 120) are disposed in the outer shaft (2) and push the two rolling tracks (60, 100) which cooperate with the outer shaft.

8. - A coupling device according to any one of claims 1 to 5, **characterized in that** some of the spring members (111, 113, 116, 120) are disposed in the inner shaft (1) and others of the spring members are disposed in the outer shaft (2), said spring members pushing the two corresponding rolling tracks which cooperate with the shaft concerned.

9. - A coupling device according to claim 3, **characterized in that** the balls (3) are arranged in a plurality of axial rows (20) :
- each row (20) of balls (3) is disposed in a concave portion of the outer shaft (2) in the form of an axial groove (32) whose section includes two concave faces (33, 34) inclined to each other which come into contact with the balls (3) of said row ;
- each row (20) of balls (3) is disposed in a concave portion of the inner shaft (1) in the form of an axial groove (31) whose section includes a bottom (35) and two flanks (36, 37), the bottom (35) being substantially perpendicular to the median plane (30) passing through the common axis (4) and through the axis of the centers of the balls (3) of said row;
- two rolling tracks (40) for each row (20) of balls (3) are disposed one on each side of the median plane (30) and cooperate with the concave portion in the form of the axial groove (31) of the inner shaft (1) and each rolling track (40) takes the form of an axial bar whose section has :
. a bearing portion (41) with a face (43) determined to come into contact with the balls (3) of said row (20) ;
. a pivot portion (42) in the form of a fork with a concave face (44) that cooperates with a conjugate convex shape of a junction face (38, 39) disposed between the sliding face (21) of the inner shaft (1) and the corresponding flank (36, 37) of the axial groove (31), the concave face (44) and the junction face (38, 39) having substantially a cylindrical shape whose axis is the articulation axis (45) ; and
- each of the two rolling tracks (40) is pushed by a spring member that bears on the bottom (35) of the axial groove (31) of the inner shaft.

10. - A coupling device according to claim 3, **characterized in that** the balls (3) are arranged in a plurality of axial rows (20) :
- each row (20) of balls (3) is disposed in a concave portion of the inner shaft (1) in the form of an axial groove (51) whose section includes two concave faces (53, 54) inclined to each other which come into contact with the balls (3) of said row ;
- each row (20) of balls (3) is disposed in a concave portion of the outer shaft (2) in the form of an axial groove (52) whose section includes a bottom (55) and two flanks (56, 57), the bottom (55) being substantially perpendicular to the median plane (30) passing through the common axis (4) and through the axis of the centers of the balls (3) of said row ;
- two rolling tracks (60) for each row (20) of balls (3) are disposed one on each side of the median plane (30) and cooperate with the concave portion in the form of the axial groove (52) of the outer shaft (2) and each rolling track (60) takes the form of an axial bar, whose section has :
. a bearing portion (61) with a face (63) determined to come into contact with the balls (3) of said row ;
. a pivot portion (62) in the form of a fork with a concave face (64) which cooperates with a conjugate convex shape of a junction face (58, 59) disposed between the sliding face (22) of the outer shaft (2) and the corresponding flank (56, 57) of the axial groove (52), the concave face (64) and the junction face (58, 59) having substantially a cylindrical shape whose axis is the articulation axis (65) ;
- each of the two rolling tracks (60) is pushed by a spring member which bears on the bottom (55) of the axial groove (52) of the outer shaft.

11. - A coupling device according to claim 4, **characterized in that** the balls (3) are arranged in a plurality of axial rows (20) :
- each row (20) of balls (3) is disposed in a concave portion of the outer shaft (2) in the form of an axial groove (72) whose section includes two concave faces (73, 74) inclined to each other which come into contact with the balls (3) of said row ;
- each row (20) of balls (3) is disposed in a concave portion of the inner shaft in the form of an axial groove (71) whose section includes a bottom (75) and two flanks (76, 77), the bottom (75) being substantially perpendicular to the median plane (30) passing through the common axis (4) and through the axis of the centers of the balls (3) of said row ;
- two rolling tracks (80) for each row (20) of balls (3) are disposed one on each side of the median plane (30) and cooperate with the concave portion in the form of the axial groove (71) of the inner shaft (1) and each rolling track (80) takes the form of an axial bar whose section has :
. a bearing portion (81) with a face (83) determined to come into contact with the balls (3) of said row ;
. a pivot portion (82) of rounded shape with a convex face (84) that cooperates with a conjugate concave shape of a junction face (78, 79) disposed between the bottom (75) and the corresponding flank (76, 77) of the axial groove (71), the convex face (54) and the junction face (78, 79) having substantially a partially cylindrical shape whose axis is the articulation axis (85) ;
- each of the two rolling tracks (80) is pushed by a spring member which bears on the bottom (75) of the axial groove (71) of the outer shaft.

12. - A coupling device according to claim 4, **characterized in that** the balls (3) are arranged in a plurality of axial rows (20) :
- each row (20) of balls (3) is disposed in a concave portion of the inner shaft (1) in the form of an axial groove (91) whose section includes two concave faces (93, 94) inclined to each other which come into contact with the balls (3) of said row ;
- each row (20) of balls (3) is disposed in a concave portion of the outer shaft (2) in the form of an axial groove (92) whose section includes a bottom (95) and two flanks (96, 97), the bottom (95) being substantially perpendicular to the median plane (30) passing through the common axis (4) and through the axis of the centers of the balls (3) of said row ;
- two rolling tracks (100) for each row (20) of balls (3) are disposed one on each side of the median plane (30) and cooperate with the concave portion in the form of the axial groove (92) of the outer shaft (2) and each rolling track (100) takes the form of an axial bar whose section has:
. a bearing portion (101) with a face (103) determined to come into contact with the balls (3) of said row ;
. a pivot portion (102) of rounded shape with a convex face (104) that cooperates with a conjugate concave shape of a junction face (98, 99) disposed between the bottom (95) and the corresponding flank (96, 97) of the axial groove (92), the convex face (104) and the junction face (98, 99) having substantially a partially cylindrical shape whose axis is the articulation axis (105) ;
- each of the two rolling tracks (100) is pushed by a spring member that bears on the bottom (95) of the axial groove (92) of the outer shaft.

13. - A coupling device according to any one of claims 9 to 12, **characterized in that** each of the two rolling tracks (40, 60, 80, 100) is pushed by a spring member in the form of an axial coil spring (111) that bears on the bottom (35, 55, 75, 95) of the axial groove (31, 52, 71, 92).

14. - A coupling device according to any one of claims 9 to 12, **characterized in that** each of the two rolling tracks (40, 60, 80, 100) is pushed by a spring member in the form of an axial spring member (120) that bears on the bottom (35, 55, 75, 95) of the axial groove (31, 52, 71, 92).

15. - A coupling device according to any one of claims 9 to 12, **characterized in that** each of the two rolling tracks (40, 60, 80, 100) is pushed by a spring member, said two spring members being connected to constitute a double spring member in the form of a double axial spring member (113) which has a low - thickness section with a rounded central portion (114) that bears on the bottom (35, 55, 75, 95) of the axial groove (31, 52, 71, 92) and two curved ends which act on said rolling tracks.

16. - A coupling device according to any one of claims 9 to 12, **characterized in that** each of the two pivoting rolling tracks (40, 60, 80, 100) is pushed by a spring member, said two spring members being connected to constitute a double spring member in the form of a double axial spring member (116) which has a low - thickness section with a bent central portion (117), the bend (119) of which engages in and bears in an axial housing (110) of the bottom (35, 55, 75, 95) of the axial groove (31, 52, 71, 92) and whose curved ends (118) act on said pivoting rolling tracks.

17. - A coupling device according to any one of claims 9 to 16, **characterized in that** the balls (3) are arranged in three axial rows (20) transverse at 120° to each other :
- the inner shaft (1) is provided with three axial grooves (31, 51, 71, 91) transverse at 120° to each other;
- the outer shaft (2) is provided with three axial grooves (32, 52, 72, 92) transverse at 120° to each other.

18. - A coupling device according to any one of claims 9 to 16, **characterized in that** :
- the balls (3) are arranged in two diametrically opposite axial rows (20) :
- the inner shaft (1) is provided with two diametrically opposite axial grooves (31, 51, 71, 91) ;
- the outer shaft (2) is provided with two diametrically opposite axial grooves (32, 52, 72, 92).

19. - A coupling device according to claim 9 or 11, **characterized in that** the balls are arranged in three axial rows transverse at 120° to each other;
- the inner shaft (1) is provided with three axial grooves (31, 71) transversely at 120° to each other, and an axial spring member (113, 116) and two rolling tracks (40, 80) in the form of axial bar are mounted in each axial groove (31, 71) ;
- the balls (3) are arranged in three axial rows (20) transverse at 120° to each other ;
- the combination of the balls (3) with the rolling tracks (40, 80) and the spring members (113, 116) is closed at each end by a shoulder (15) and a retaining ring (12) that is adapted to engage in each of the axial grooves (31, 71) of the inner shaft (1) ; and
- the outer shaft (2) is provided with three axial grooves (32, 72) transverse at 120° to each other, which are adapted to slide on the rows (20) of balls (3), the axial grooves (32, 72) having the length required to allow a required axial sliding of the outer shaft (2) and the inner shaft (1).

20. - A coupling device according to any one of previous claims, **characterized in that** it applies to an intermediate part (7) of an automobile vehicle steering column.

21. - A coupling device according to any one of claims 1 to 19, **characterized in that** it applies to a top part (6) of an automobile vehicle steering column.

## Patentansprüche

1. - Kupplungsvorrichtung zur Verbindung von zwei Wellen, einer inneren Welle (1) und einer äußeren Welle (2), die sich in Richtung einer gemeinsamen Achse (4) ineinander schieben, wobei diese Kupplungsvorrichtung Kugeln (3) aufweist, von denen jede zwischen einem konkaven Teil der inneren Welle (1) und einem konkaven Teil der äußeren Welle (2) angeordnet ist, und sich die Kugeln (3) auf zwei Laufbahnen (40, 60, 80, 100) bewegen, angeordnet auf beiden Seiten einer Mittelebene (30), die durch die gemeinsame Achse (4) und die Mitte der Kugeln (3) hindurchgeht, **dadurch gekennzeichnet, dass**
- jede der beiden Laufbahnen (40, 60, 80, 100) mit dem konkaven Teil (31, 52, 71, 92) einer der beiden Wellen zusammenwirkt und um eine Drehachse (45, 65, 85, 105) pendelt, wobei die Laufbahnen und die Drehachsen parallel zur gemeinsamen Achse (4) verlaufen;
- jede der beiden Laufbahnen (40, 60, 80, 100) von einem elastischen Element (111, 113, 116, 120), angeordnet im konkaven Teil (31, 52, 71, 92) und sich darauf abstützend, gegen jede der Kugeln (3) gedrückt wird und
- dass sich jede der Kugeln (3) direkt gegen den konkaven Teil (32, 51, 72, 91) der anderen Welle verschiebt, so dass
. im Ruhezustand, wenn kein Drehmoment übertragen wird, und im Arbeitszustand bei Übertragung eines Drehmoments
. jede der Kugeln (3) stets auf jeder Seite der Mittelebene (30) über eine Auflagezone mit der entsprechenden Laufbahn (40, 60, 80, 100) in einer der beiden Wellen (1, 2) und über eine Auflagezone mit dem konkaven Teil (32, 51, 72, 91) der anderen Welle (2, 1) in Kontakt ist und
. die Mitte jeder der Kugeln (3), die Mitte der Auflagezone auf der Laufbahn (40, 60, 80, 100) und der entsprechende Mittelpunkt der Drehachse (45, 65, 85, 105) der Laufbahn stets fluchten.

2. - Kupplungsvorrichtung nach Anspruch 1, **dadurch gekennzeichnet, dass** jede der beiden Laufbahnen (40, 60, 80, 100) von einem elastischen Element angedrückt wird, wobei die beiden elastischen Elemente miteinander zu einem doppelten elastischen Element (113, 116) verbunden sind.

3. - Kupplungsvorrichtung nach einem beliebigen der vorstehenden Ansprüche, **dadurch gekennzeichnet, dass** jede der beiden Laufbahnen (40, 60) um die Drehachse (45, 65), die sich zwischen einer Gleitfläche (21, 22) und dem konkaven Teil (31, 52) einer der beiden Wellen (1, 2) befindet, pendelt, so dass jede Laufbahn an der Stoßstelle zwischen der Gleitfläche (21, 22) und dem konkaven Teil (31, 52) pendelt.

4. - Kupplungsvorrichtung nach Anspruch 1 oder 2, **dadurch gekennzeichnet, dass** jede der beiden Laufbahnen (80, 100) um die Drehachse (85, 105), die sich auf der Innenseite des konkaven Teils (71, 92) einer der beiden Wellen (1, 2) befindet, pendelt, so dass jede Laufbahn in diesem konkaven Teil pendelt.

5. - Kupplungsvorrichtung nach einem beliebigen der vorstehenden Ansprüche, **dadurch gekennzeichnet, dass** Rücksprünge (23) und Vorsprünge (24) mit zueinander passenden Profilen mit einem gewissen Spiel auf der inneren Welle (1) und der äußeren Welle (2) ausgeführt sind, so dass das Drehmoment auch bei einem Bruch der Kugeln (3) noch zwischen der inneren Welle (1) und der äußeren Welle (2) übertragen werden kann.

6. - Kupplungsvorrichtung nach einem beliebigen der vorstehenden Ansprüche, **dadurch gekennzeichnet, dass** die elastischen Elemente (111, 113, 116, 120) in der inneren Welle (1) angeordnet sind und die beiden Laufbahnen (40, 80) andrücken, welche mit der inneren Welle zusammenwirken.

7. - Kupplungsvorrichtung nach einem beliebigen der vorstehenden Ansprüche 1 bis 5, **dadurch gekennzeichnet, dass** die elastischen Elemente (111, 113, 116, 120) in der äußeren Welle (2) angeordnet sind und die beiden Laufbahnen andrücken (60, 100), welche mit der äußeren Welle zusammenwirken.

8. - Kupplungsvorrichtung nach einem beliebigen der Ansprüche 1 bis 5, **dadurch gekennzeichnet, dass** die elastischen Elemente (111, 113, 116, 120) teils in der inneren Welle (1) und teils in der äußeren Welle (2) angeordnet sind, wobei sie die beiden entsprechenden Laufbahnen andrücken, welche mit der jeweiligen Welle zusammenwirken.

9. - Kupplungsvorrichtung nach Anspruch 3, **dadurch gekennzeichnet, dass** die Kugeln (3) in mehreren axialen Reihen (20) angeordnet sind:
- jede Reihe (20) Kugeln (3) ist in einem konkaven Teil der äußeren Welle (2) in Form einer axialen Nut (32) angeordnet, deren Querschnitt zwei konkave, gegeneinander geneigte Flächen (33, 34) aufweist, die im Kontakt mit den Kugeln (3) der besagten Reihe sind;
- jede Reihe (20) Kugeln (3) ist in einem konkaven Teil der inneren Welle (1) in Form einer axialen Nut (31) angeordnet, deren Querschnitt einen Boden (35) und zwei Flanken (36, 37) aufweist, wobei der Boden (35) im Wesentlichen senkrecht zur Mittelebene (30) verläuft, die durch die gemeinsame Achse (4) und die Mittenachse der Kugeln (3) der besagten Reihe hindurchgeht;
- bei jeder Reihe (20) Kugeln (3) sind die beiden Laufbahnen (40) auf beiden Seiten der Mittelebene (30) angeordnet und wirken mit dem konkaven Teil in Form einer axialen Nut (31) der inneren Welle (1) zusammen, und jede Laufbahn (40) hat die Form eines axial verlaufenden Stabes, dessen Querschnitt Folgendes aufweist:
. einen Auflageabschnitt (41) mit einer bestimmten Fläche (43), die mit den Kugeln (3) der Reihe (20) in Kontakt tritt;
. einen Pendelabschnitt (42) in Gabelform mit einer konkaven Fläche (44), die mit einer dazu passenden konvexen Form einer Stoßfläche (38, 39) zwischen der Gleitfläche (21) der inneren Welle (1) und der entsprechenden Flanke (36, 37) der axialen Nut (31) zusammenwirkt, wobei die konkave Fläche (44) und die Stoßfläche (38, 39) im Wesentlichen eine zylindrische Form haben, deren Achse die Drehachse (45) ist; und
- jede der beiden Laufbahnen (40) wird von einem elastischen Element angedrückt, das sich auf dem Boden (35) der axialen Nut (31) der inneren Welle abstützt.

10. - Kupplungsvorrichtung nach Anspruch 3, **dadurch gekennzeichnet, dass** die Kugeln (3) in mehreren axialen Reihen (20) angeordnet sind:
- jede Reihe (20) Kugeln (3) ist in einem konkaven Teil der inneren Welle (1) in Form einer axialen Nut (51) angeordnet, deren Querschnitt zwei konkave, gegeneinander geneigte Flächen (53, 54) aufweist, die im Kontakt mit den Kugeln (3) der besagten Reihe sind;
- jede Reihe (20) Kugeln (3) ist in einem konkaven Teil der äußeren Welle (2) in Form einer axialen Nut (52) angeordnet, deren Querschnitt einen Boden (55) und zwei Flanken (56, 57) aufweist, wobei der Boden (55) im Wesentlichen senkrecht zur Mittelebene (30) verläuft, die durch die gemeinsame Achse (4) und die Mittenachse der Kugeln (3) der besagten Reihe hindurchgeht;
- bei jeder Reihe (20) Kugeln (3) sind die beiden Laufbahnen (60) auf beiden Seiten der Mittelebene (30) angeordnet und wirken mit dem konkaven Teil in Form einer axialen Nut (52) der äußeren Welle (2) zusammen, und jede Laufbahn (60) hat die Form eines axial verlaufenden Stabes, dessen Querschnitt Folgendes aufweist:
. einen Auflageabschnitt (61) mit einer bestimmten Fläche (63), die mit den Kugeln (3) der besagten Reihe in Kontakt tritt;
. einen Pendelabschnitt (62) in Gabelform mit einer konkaven Fläche (64), die mit einer dazu passenden konvexen Form einer Stoßfläche (58, 59) zwischen der Gleitfläche (22) der äußeren Welle (2) und der entsprechenden Flanke (56, 57) der axialen Nut (52) zusammenwirkt, wobei die konkave Fläche (64) und die Stoßfläche (58, 59) im Wesentlichen eine zylindrische Form haben, deren Achse die Drehachse (65) ist; und
- jede der beiden Laufbahnen (60) wird von einem elastischen Element angedrückt, das sich auf dem Boden (55) der axialen Nut (52) der äußeren Welle abstützt.

11. - Kupplungsvorrichtung nach Anspruch 4, **dadurch gekennzeichnet, dass** die Kugeln (3) in mehreren axialen Reihen (20) angeordnet sind:
- jede Reihe (20) Kugeln (3) ist in einem konkaven Teil der äußeren Welle (2) in Form einer axialen Nut (72) angeordnet, deren Querschnitt zwei konkave, gegeneinander geneigte Flächen (73, 74) aufweist, die im Kontakt mit den Kugeln (3) der besagten Reihe sind;
- jede Reihe (20) Kugeln (3) ist in einem konkaven Teil der inneren Welle (1) in Form einer axialen Nut (71) angeordnet, deren Querschnitt einen Boden (75) und zwei Flanken (76, 77) aufweist, wobei der Boden (75) im Wesentlichen senkrecht zur Mittelebene (30) verläuft, die durch die gemeinsame Achse (4) und die Mittenachse der Kugeln (3) der besagten Reihe hindurchgeht;
- bei jeder Reihe (20) Kugeln (3) sind die beiden Laufbahnen (80) auf beiden Seiten der Mittelebene (30) angeordnet und wirken mit dem konkaven Teil in Form einer axialen Nut (71) der inneren Welle (1) zusammen, und jede Laufbahn (80) hat die Form eines axial verlaufenden Stabes, dessen Querschnitt Folgendes aufweist:
. einen Auflageabschnitt (81) mit einer bestimmten Fläche (83), die mit den Kugeln (3) der besagten Reihe in Kontakt tritt;
. einen Pendelabschnitt (82) mit abgerundeter Form mit einer konvexen Fläche (84), die mit einer dazu passenden konkaven Form einer Stoßfläche (78, 79) zwischen dem Boden (75) und der entsprechenden Flanke (76, 77) der axialen Nut (71) zusammenwirkt, wobei die konvexe Fläche (54) und die Stoßfläche (78, 79) im Wesentlichen eine zylindrische Form haben, deren Achse die Drehachse (85) ist;
- jede der beiden Laufbahnen (80) wird von einem elastischen Element angedrückt, das sich auf dem Boden (75) der axialen Nut (71) der inneren Welle abstützt.

12. - Kupplungsvorrichtung nach Anspruch 4, **dadurch gekennzeichnet, dass** die Kugeln (3) in mehreren axialen Reihen (20) angeordnet sind:
- jede Reihe (20) Kugeln (3) ist in einem konkaven Teil der inneren Welle (1) in Form einer axialen Nut (91) angeordnet, deren Querschnitt zwei konkave, gegeneinander geneigte Flächen (93, 94) aufweist, die im Kontakt mit den Kugeln (3) der besagten Reihe sind;
- jede Reihe (20) Kugeln (3) ist in einem konkaven Teil der äußeren Welle (2) in Form einer axialen Nut (92) angeordnet, deren Querschnitt einen Boden (95) und zwei Flanken (96, 97) aufweist, wobei der Boden (95) im Wesentlichen senkrecht zur Mittelebene (30) verläuft, die durch die gemeinsame Achse (4) und die Mittenachse der Kugeln (3) der besagten Reihe hindurchgeht;
- bei jeder Reihe (20) Kugeln (3) sind die beiden Laufbahnen (100) auf beiden Seiten der Mittelebene (30) angeordnet und wirken mit dem konkaven Teil in Form einer axialen Nut (92) der äußeren Welle (2) zusammen, und jede Laufbahn (100) hat die Form eines axial verlaufenden Stabes, dessen Querschnitt Folgendes aufweist:
. einen Auflageabschnitt (101) mit einer bestimmten Fläche (103), die mit den Kugeln (3) der besagten Reihe in Kontakt tritt;
. einen Pendelabschnitt (102) mit abgerundeter Form mit einer konvexen Fläche (104), die mit einer dazu passenden konkaven Form einer Stoßfläche (98, 99) zwischen dem Boden (95) und der entsprechenden Flanke (96, 97) der axialen Nut (92) zusammenwirkt, wobei die konvexe Fläche (104) und die Stoßfläche (98, 99) im Wesentlichen eine zylindrische Form haben, deren Achse die Drehachse (105) ist ;
- jede der beiden Laufbahnen (100) wird von einem elastischen Element angedrückt, das sich auf dem Boden (95) der axialen Nut (92) der äußeren Welle abstützt.

13. - Kupplungsvorrichtung nachß einem beliebigen der Ansprüche 9 bis 12, **dadurch gekennzeichnet, dass** jede der beiden Laufbahnen (40, 60, 80, 100) von einem elastischen Element in Form eines elastischen axialen Wulstes (111) angedrückt wird, das sich auf dem Boden (35, 55, 75, 95) der axialen Nut (31, 52, 71, 92) abstützt.

14. - Kupplungsvorrichtung nach einem beliebigen der Ansprüche 9 bis 12, **dadurch gekennzeichnet, dass** jede der beiden Laufbahnen (40, 60, 80, 100) von einem elastischen Element in Form eines elastischen axialen Elements (120) angedrückt wird, das sich auf dem Boden (35, 55, 75, 95) der axialen Nut (31, 52, 71, 92) abstützt.

15. - Kupplungsvorrichtung nach einem beliebigen der Ansprüche 9 bis 12, **dadurch gekennzeichnet, dass** jede der beiden Laufbahnen (40, 60, 80, 100) von einem elastischen Element angedrückt wird, wobei die beiden elastischen Elemente miteinander zu einem elastischen doppelten Element in Form eines elastischen doppelten axialen Elements (113) verbunden sind, das einen dünnen Querschnitt mit einem abgerundeten mittleren Abschnitt (114), der sich auf dem Boden (35, 55, 75, 95) der axialen Nut (31, 52, 71, 92) abstützt, und zwei umgebogene Enden hat, die auf die Laufbahnen wirken.

16. - Kupplungsvorrichtung nach einem beliebigen der Ansprüche 9 bis 12, **dadurch gekennzeichnet, dass** jede der beiden Laufbahnen (40, 60, 80, 100) von einem elastischen Element angedrückt wird, wobei die beiden elastischen Elemente miteinander zu einem elastischen doppelten Element in Form eines elastischen doppelten axialen Elements (116) verbunden sind, das einen dünnen Querschnitt mit einem zusammengefalteten mittleren Abschnitt (117) hat, dessen Faltung (119) in eine axiale Aufnahme (110) im Boden (35, 55, 75, 95) der axialen Nut (31, 52, 71, 92) eingreift und sich darauf abstützt und dessen zwei umgebogenen Enden (118) auf die Laufbahnen wirken.

17. - Kupplungsvorrichtung nach einem beliebigen der Ansprüche 9 bis 16, **dadurch gekennzeichnet, dass** die Kugeln (3) in drei axialen, in Querrichtung um 120° gegeneinander versetzten Reihen angeordnet sind:
- die innere Welle (1) ist mit drei axialen, in Querrichtung um 120° gegeneinander versetzten Nuten (31, 51, 71, 91) versehen;
- die äußere Welle (2) ist mit drei axialen, in Querrichtung um 120° gegeneinander versetzte Nuten (32, 52, 72, 92) versehen.

18. - Kupplungsvorrichtung nach einem beliebigen der Ansprüche 9 bis 16, **dadurch gekennzeichnet, dass**
- die Kugeln (3) in zwei sich diametral gegenüberliegenden Reihen (20) angeordnet sind;
- die innere Welle (1) mit zwei sich diametral gegenüberliegenden Nuten (31, 51, 71, 91) versehen ist;
- die äußere Welle (2) mit zwei sich diametral gegenüberliegenden Nuten (32, 52, 72, 92) versehen ist.

19. - Kupplungsvorrichtung nach Anspruch 9 oder 11, **dadurch gekennzeichnet, dass**
- die innere Welle (1) mit drei axialen, in Querrichtung um 120° gegeneinander versetzten Nuten (31, 71) versehen ist und dass in jeder axialen Nut (31, 71) ein elastisches axiales Element (113, 116) und zwei Laufbahnen (40, 80) in Form eines axial verlaufenden Stabes installiert sind;
- die Kugeln (3) in drei axialen, in Querrichtung um 120° gegeneinander versetzten Reihen (20) angeordnet sind;
- die Gesamtheit aus den Kugeln (3), Laufbahnen (40, 80) und elastischen Elementen (113, 116) an jedem Ende durch einen Ansatz (15) und einen Haltering (12) verschlossen ist, der in jede der axialen Nuten (31, 71) der inneren Welle (1) eingreift; und dass
- die äußere Welle (2) mit drei axialen, in Querrichtung um 120° gegeneinander versetzten Nuten (32, 72) versehen ist, die auf den Reihen (20) Kugeln (3) gleiten, wobei die axialen Nuten (32, 72) die erwünschte Länge haben, um die geforderte axiale Verschiebung der äußeren Welle (2) und inneren Welle (1) zueinander zu ermöglichen.

20. - Kupplungsvorrichtung nachß einem beliebigen der vorstehenden Ansprüche, **dadurch gekennzeichnet, dass** sie sich im Mittelteil (7) einer Kraftfahrzeuglenksäule einsetzen lässt.

21. - Kupplungsvorrichtung nach einem beliebigen der Ansprüche 1 bis 19, **dadurch gekennzeichnet, dass** sie sich im oberen Teil (6) einer Kraftfahrzeuglenksäule einsetzen lässt.
